# EUROPEAN PATENT SPECIFICATION

(11) **EP 1 888 450 B1**
(45) Date of publication and mention of the grant of the patent: **28.11.2012**
(21) Application number: 06721398.3
(22) Date of filing: 18.04.2006
(51) Int. Cl.: B67D 1/12, B65D 83/44, B67D 1/08, B65D 83/42, B67D 1/04, F16K 11/10

(54) **LIQUID STORAGE AND DISPENSING APPARATUS**
VORRICHTUNG ZUR LAGERUNG UND ABGABE EINER FLÜSSIGKEIT
APPAREIL DE STOCKAGE ET DE DISTRIBUTION DE LIQUIDE

(30) Priority: 19.04.2005 AU 2005901972; 24.11.2005 AU 2005906570
(43) Date of publication of application: 20.02.2008
(73) Proprietor: Ecokeg Pty Ltd, Glen Iris, Victoria 3146 (AU)
(72) Inventor: FIELD, Warwick William, Kalorama, Victoria 3766 (AU)
(74) Representative: Marshall, Caroline
(86) International application number: PCT/AU2006/000517
(87) International publication number: WO 2006/110948

(56) References cited:
- WO-A1-00/78665
- WO-A1-87/03573
- WO-A1-2004/063087
- WO-A1-2004/063087
- GB-A- 2 013 809
- GB-A- 2 188 040
- GB-A- 2 188 040
- GB-A- 2 209 740
- GB-A- 2 283 967
- US-A- 3 599 843

## Description

### Field

This invention relates to apparatus for storing and dispensing liquids and to the construction of valves used in such apparatus. The invention has particular, but not exclusive, application to the provision of beverage containers formed of plastics materials and valve fittings for such containers.

Embodiments of the present invention may be applied to the production of containers for storage, and dispensing of beer but it will be appreciated from the ensuing description that apparatus in accordance with the invention may also be applied to the storage, and dispensing of other liquids such as cider or carbonated beverages.

### Background

Traditionally, beer has been supplied to commercial establishments or for special events in stainless steel kegs. These are of sturdy welded stainless steel construction and are fitted with a dispensing spear structure comprising a long stainless steel dispenser tube through which to dispense beer from the bottom of the keg and a valve structure through which to supply pressurising gas into the keg so as to pressurise the contents and force the beer out through the dispensing tube into a dispenser line fitted with one or more downstream dispense fonts, taps or guns.

In recent times, plastics technology has been applied to the manufacture of disposable fully recyclable beverage containers made of plastics material in a range of sizes including sizes appropriate to replacement of traditional stainless steel beer kegs. Examples of such containers are disclosed in International Patent Publications WO 00/78665 and WO2004/063087.

Plastics beverage containers have been generally blow moulded in PET (polyethylene terephthalate) although other plastics may also be utilised such as polypropylene, polycarbonate and high density polyethylene (HDPE).

In order to further promote recycling, it is desirable that the valve fittings for the spear structure be formed of appropriate plastics material. International Patent Publication WO 2004/063087 discloses a valve construction by which a valve housing can be secured to a container before the remaining valve components are fitted so as to avoid exposing the internal valve components to the risk of damage. By one aspect of the present invention it is possible to provide a modified valve construction which further facilitates assembly and installation in a liquid container. A modified construction can also be provided that is adapted to provide for venting of excess pressure from the liquid container if desired. An alternative modified valve construction enables an alternative connection to a liquid container. US 3,599,843 discloses a tapping device for beer kegs and the like including or key adapter semipernestly secured within a key opening and a coupler releasobly secured to the adapter.

### Summary of the Invention

The invention provides apparatus for storing and dispensing a liquid comprising:
a liquid container having a neck through which to fill the container with a liquid and to dispense the liquid therefrom, the neck having an external screw thread;
a valve structure disposed within the container neck; and
a dispenser tube extending from the valve structure to an interior region of the container;
wherein the valve structure defines valves for supply of pressurising fluid into the interior of the container and for dispensing liquid outwardly through the dispenser tube and valve structure and wherein the valve structure comprises a securing ring that has an internal screw-thread by which the valve structure is secured to the neck of the container and a valve housing that plugs the container neck and extends from an inner end disposed interiorly of the container to an outer end disposed exteriorly of the container and valve components defining within the housing a pair of valves for the supply of pressurising fluid into the interior of the container and for dispensing liquid outwardly from the container.

In an embodiment, the valve housing comprises separately formed first and second formed valve housing body parts, the first valve housing body part being attached into the neck of the container and the second valve housing body part being mechanically coupled to the first body part to form the valve housing.

The invention also extends to a valve structure for a liquid storage and dispensing container comprising :
a valve housing for plugging the neck of a liquid container having an external screw-thread and through which to fill and discharge liquid into and from the container and extending from a first end to be located interiorly of the container when so attached to an end to be located exteriorly of the container;
a securing ring having an internal screw-thread by which the valve housing is secured to the liquid container; and
valve components defining within the valve housing a pair of valves for supply of pressurising gas into the interior of the container and for dispensing liquid outwardly from the container.

In an embodiment, the valve housing comprises separately formed first and second valve housing body parts, the first valve housing body part attached to the neck of the container, and the second valve housing body part being mechanically coupled to the first valve housing body part to form the valve body and to retain the valve components within the housing.

According to an arrangement not forming part of the invention, there is also provided apparatus for storing and dispensing a liquid comprising:
a liquid container having a neck through which to fill the container with a liquid and to dispense the liquid therefrom;
a valve structure disposed within the container neck; and
a dispenser tube extending from the valve structure to an interior region of the container;
wherein the valve assembly defines valves for supply of pressurising fluid into the interior of the container and for dispensing liquid outwardly through the dispenser tube and valve structure and wherein the valve structure comprises a valve housing secured to the neck of the container and extending from an inner end disposed interiorly of the container and an outer end disposed exteriorly of the container and valve components defining within the housing a pair of valves for the supply of pressurising fluid into the interior of the container and for dispensing liquid outwardly from the container, and the valve housing comprises separately formed first and second formed valve body parts, the first valve housing body part being attached into the neck of the container and defining the end of the housing located interiorly of the container and the second valve housing body part being mechanically coupled to the first body part to form the valve housing and to retain the valve components within that housing.

In an arrangement not forming part of the invention, there is a valve structure for a liquid storage and dispensing container comprising:
a valve housing for attachment into the neck of a liquid container and through which to fill and discharge liquid into and from the container and extending from a first end to be located interiorly of the container when so attached to an end to be located exteriorly of the container,
valve components defining within the housing a pair of valves for supply of pressurising fluid into the interior of the container and for dispensing liquid outwardly from the container
wherein the valve housing comprises separately formed first and second valve housing body parts, the first valve housing body part defining the end of the housing to be located internally of the container by attachment of the first valve housing body part into the neck of the container, and the second valve housing body part being mechanically coupled to the first valve housing body part to form the valve body and to retain the valve components within the housing.

In another arrangement not forming part of the invention there is apparatus for storing and dispensing a liquid comprising:
a liquid container having a neck through which to fill the container with a liquid and to dispense the liquid therefrom;
a valve structure disposed within the container neck; and
a dispenser tube extending from the valve structure to an interior region of the container;
wherein the valve assembly defines valves for supply of pressurising fluid into the interior of the container and for dispensing liquid outwardly through the dispenser tube and valve structure and wherein the valve structure comprises a valve housing secured to the neck of the container and extending from an inner end disposed interiorly of the container and an outer end disposed exteriorly of the container and valve components defining within the housing a pair of valves for the supply of pressurising fluid into the interior of the container and for dispensing liquid outwardly from the container, and the valve housing is provided with an over-pressure release valve for venting from the interior to the exterior of the container.

In a further arrangement not forming part of the invention, there is a valve structure for a liquid storage and dispensing container comprising:
a valve housing for attachment into the neck of a liquid container and through which to fill and discharge liquid into and from the container and extending from a first end to be located interiorly of the container when so attached to an end to be located exteriorly of the container,
valve components defining within the housing a pair of valves for supply of pressurising fluid into the interior of the container and for dispensing liquid outwardly from the container
wherein the valve housing is provided with an over-pressure release valve for venting from the interior to the exterior of the container.

The first and second valve housing body parts may be mechanically coupled by screw fitting together.

The screw fitting may be a one way non releasable screw fitting so that when the two valve housing body parts are screw fitted together they cannot be unscrewed.

The first valve housing body part may comprise an inner annular structure to fit around the valve components and to couple with the second valve housing body part and an outer annular structure for attachment into the neck of the container.

The inner annular structure may be screw threaded and the second valve housing body part may have a complementary screw thread to provide the mechanical coupling.

The screw thread of the inner annular structure of the first housing body part may be an internal screw thread and the second valve housing body part may comprise an end spigot with a complementary external screw thread.

The first and second valve housing body parts may incorporate a locking mechanism to prevent subsequent unscrewing. For example, the screw threads may be formed so that they jump over or interfere with one another as the mechanical coupling is formed so as to prevent subsequent unscrewing or one of the first and second body parts may have locking lugs that prevent unscrewing.

The outer annular structure of the first valve housing body part may have an outwardly facing circumferential surface for attachment into the neck of the container and having a diameter in the range 50mm to 80mm. More particularly this diameter may be of the order of 70mm.

The outer annular structure of the first valve housing body part may be in the form of a tubular ring spaced outwardly from the inner annular structure of that body part.

The tubular ring may be connected to the inner annular structure by a radial connecting flange.

The valve housing may be provided with an over-pressure release valve providing for venting from the interior of the container between the inner and outer annular structures of the first valve housing body part.

The over-pressure release valve may comprise a release valve housing formed in the valve housing first body part and a release valve retainer flange formed on the valve housing second body part to retain a release valve within the release valve housing when the valve housing second body part is mechanically coupled to the valve housing first body part.

The release valve housing may be a tubular housing extending inwardly from the container from the radial flange connecting the outer tubular ring of the outer valve housing first body part to the inner annular structure of that body part.

The container and the valve housing may both be formed of plastics material. They may for example be formed of PET.

The first body part of the valve housing may be secured within the neck of the container by heat fusion, for example by ultrasonic or spin fusion technique. It may alternatively be secured within the neck of the container by a clinching technique, for example through use of a stainless steel clinching ring or screw threaded plastic securing rings.

The valve housing first body part may be connected to the neck of the container without the remainder of the valve assembly being in place. The dispenser tube and the valve assembly being later installed and valve components being held against withdrawal when formation of the housing is completed by mechanically coupling the first and second body parts together.

The valve components may be retained against withdrawal by a retainer element on the second body part of the valve housing. That retainer element may be in the form of a retainer ring fitted into a recess in the second body part of the valve housing. The recess may be in the form of an internal circumferential groove in the second body part and the retainer ring may be a resilient ring of plastics or some other resilient but strong material force fitted into the groove. For example, nitrile rubber.

The retainer ring may serve the dual function of retaining the other valve components against withdrawal through the outer end of the valve housing and providing an annular valve seat for one of the said valves.

In order that the invention may be more fully explained, one particular embodiment will be described with reference to the accompanying drawings in which:
Figure 1 is a partially sectioned elevation of beer keg incorporating a liquid container fitted with a dispenser tube and valve structure in accordance with an arrangement not forming part of the invention and coupled to a conventional beer dispense coupler;

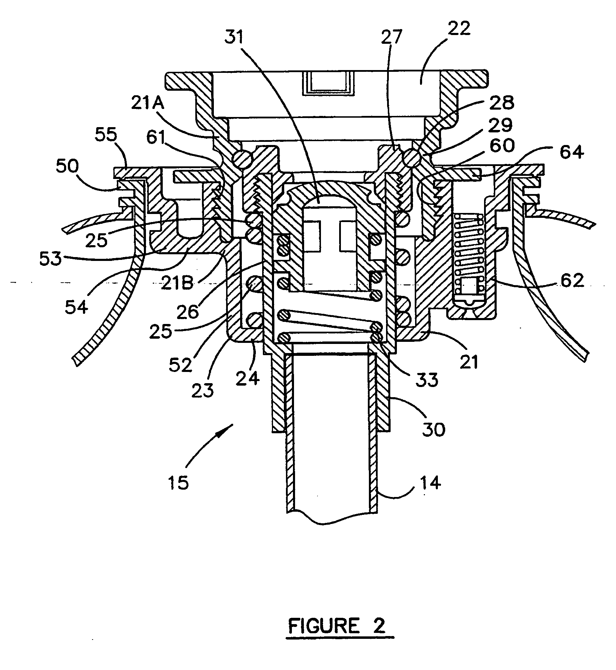

Figure 2 is a vertical cross-section through upper parts of the beer keg;
Figure 3 is an exploded perspective view of certain components of the valve structure;
Figure 4 shows the manner of assembly of the valve structure; and
Figure 5 is a vertical partial cross-section through a section of upper parts of a beer keg of an embodiment of the invention.

The drawings illustrate a beer keg which incorporates a container fitted with a valve structure in accordance with the present invention. The keg comprises an outer hollow shell 11 which encloses and supports a liquid container 12 fitted with a spear structure denoted generally as 13. Spear structure 13 comprises a dispenser tube 14 connected to a valve structure 15 which is secured into an upper cylindrical neck 16 of the container 12. Neck 16 is formed with a pair of vertically spaced outwardly, projecting circumferential flanges 50, 51.

Outer shell 11 is formed of two components 17, 18 both moulded of a strong plastics material, for example, high density polyethylene or polypropylene. Component 17 is in the form of an open topped tub to receive the liquid container 12 and component 18 is formed as an upper lid which is a pressed fit into the main body part and has a central aperture to receive the neck 16 of the liquid container 12, the inner ring of the lid being located under the flange 51. The outer shell 11 may have the same external dimensions and features as conventional stainless steel kegs to enable the keg to be generally handled and filled with the same equipment as the standard stainless steel kegs.

Liquid container 12 is blow moulded from an appropriate plastics material. It may, for example, be blow moulded from PET. It may be moulded in a single layer or with a multi layer or laminated construction as is known in the production of PET bottles. It may be coated externally with an inert or epoxy coating, for example, to serve as a barrier to permeation by oxygen and CO₂.

Container 12 is a sliding fit within the tub shaped main body part 17 of the outer shell. The lower end of the outer shell is shaped to form an upwardly dished floor 19 with a curvature to match the domed lower end of the container to provide secure bottom support and the upper end of the container is also located by engagement with the lid portion 18 of the outer shell.

Valve structure 15 comprises a valve housing 21 secured into the neck 16 of container 12 so as to extend from an upper end 22 located exteriorly of the container and a bottom end 23 disposed interiorly of the container. Valve housing 21 is formed by two separately formed valve body parts 21A, 21B mechanically coupled together by screw fitting as described below. Valve body part 21B is attached into the neck of container 12 by heat fusion, for example by ultrasonic horn spin fusion technique, after which the dispenser tube and various valve components are installed, before the valve body part 21A is screw fitted to compete the valve housing 21, and retain the valve components in place The upper end of valve body 21 is shaped as a female coupling to enable it to be coupled to a conventional beer dispensing system or alternatively to a filling nozzle as described below.

Valve housing body part 21B comprises an inner annular structure 52 and an outer annular structure 53 in the form of a circular ring spaced outwardly from the inner annular structure and connected to it by a radial flange 54. The outer annular ring fits snugly within the neck of container 12 and it has an outward end flange 55 to abut the flange 50 at the end of the container neck.

The upper or outer end of inner annular structure 52 is provided with an internal screw thread 60 to interfit with a complementary external screw thread 61 formed on the lower end of valve body part 21A.

The lower end of the inner annular structure of valve body part 21B has an inturned annular end flange 24 which provides a lower end abutment for an outer valve spring 25 and a lower slide support for a sliding valve member 26 located within the valve body and formed at its lower end with a spigot 30 by which it is connected to the upper end of dispenser tube 14.

The upper end of sliding valve member 26 is fitted with an annular valve head member 27 which is biased upwardly by the outer valve spring 25 against a resilient ring 28 which is force fitted into an annular groove 29 formed in valve housing body part 21A adjacent the upper end 22 of the housing. Ring 28 serves as a retainer ring holding the various valve components of the valve structure 15 in an operative assembly and also serves as a valve seat for the annular valve member 27 providing an outer valve effective in filling and dispensing operations in the manner to be described below. This outer valve is comprised of the ring 28, the annular valve member 27, the biasing spring 25 and a series of circumferentially spaced radial outlet ports in the lower part of valve body part 21B. The ring 28 may be formed of neoprene or some other resilient but strong material capable of providing the strength necessary for the ring to serve as a retaining ring and the resilience desired in a valve seat.

Valve structure 15 further comprises an inner valve formed by an upwardly domed inner valve head 31 located within the upper end of tubular valve member 26 and biased upwardly against an O-ring seat 32 in the underside of the annular valve head member 27 by an inner valve spring 33.

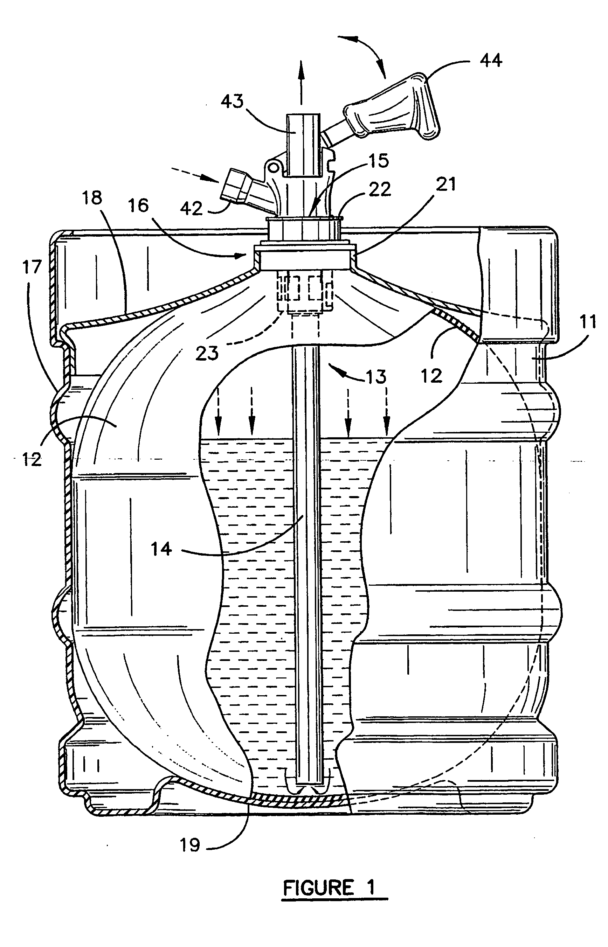

Figure 1 shows the manner in which a conventional dispense coupler 40 may be fitted to the upper end of valve body 21 and the coupler actuated to dispense beer from the container. Coupler 40 has a body 41 the lower end of which interfits with the female coupling of valve body 21 in conventional fashion. Coupler body 41 has a gas inlet connector 42 through which a pressurising fluid, typically pressurised gas (for example carbon dioxide) is applied to the outer valve of valve structure 15 and it houses a central valve actuating beer outlet tube 43 movable vertically in the coupler body 41 by operation of a handle 44 that pivots on a pivot pin 45 at the upper end of the coupler body 41.

When the handle 44 and tube 43 of coupler 40 are in a raised condition both valves of the valve structure are closed. When the handle 44 of the coupler is swung down to a valve actuating position the tube 43 is forced downwardly to push the domed inner valve head 31 down against the action of inner valve spring 33 to open the inner valve and the pressurising gas supplied to the upper end of valve body 21 through coupler 50 forces the annular valve head 27 downwardly against the action of biasing spring 25 to open the outer valve and allow the pressurising gas to flow out through valve ports 34 into the container 12. Beer is dispensed by flowing upwardly through dispenser tube 14 and up through the open inner valve and tube 43 of the coupler into the dispensing system. A keg may be filled in either an upright or an inverted position. In the usual practice the keg is filled in an inverted position, beer is supplied through a filling nozzle to the outer end of valve body 21 forces the outer valve to open and the beer flows into the container through the outer valve outlet ports 34, gas within the container escaping through the dispenser tube 14 and the inner valve.

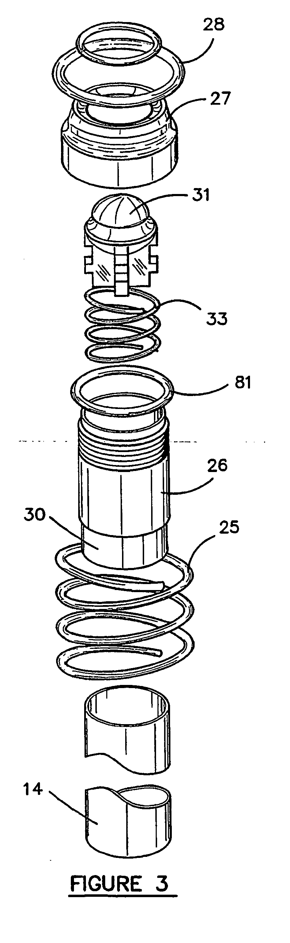

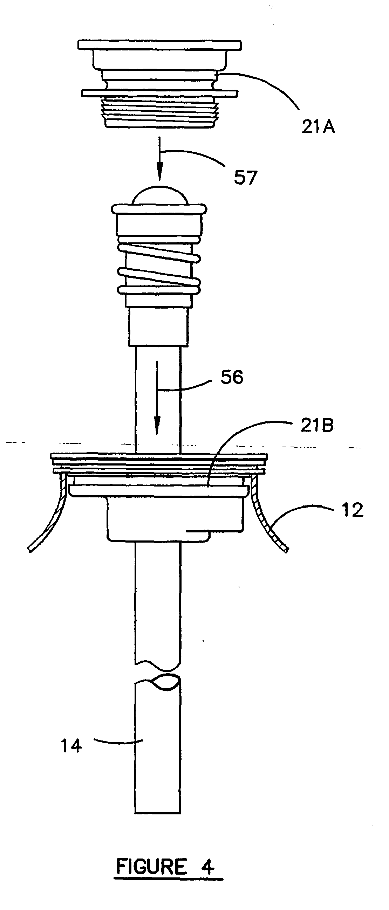

Figure 4 illustrates the manner in which the valve structure can be assembled and installed into the container 12. In a first step the valve housing body part 21B is heat fused into the neck of container 12, for example by ultrasonic horn or spin fusion technique. In a separate assembly operation the components shown in Figure 3 are brought together into an assembly which can be inserted downwardly through the valve housing body part 21B as indicated by the arrow 56 in Figure 4. By heat fusing the valve housing body part 21B prior to assembly of the other parts, damage to the other parts by heat fusing is avoided. Specifically the inner spring 33 and the inner valve head 31 are located within the tubular valve member 26 and held in place by screwing the outer annular valve head member 27 onto the top of the valve member 26. The outer spring 25 is fitted around the outside of valve member 26 and the lower end of member 26 is fitted onto the end of dispenser tube 14 sealed by an interference fit, sealed by way of an "o" ring or ultrasonically spot fused. The resulting assembly is then inserted downwardly through the installed valve housing body part 21B until the lower end of outer valve spring 25 rests on the inturned flange 23 at the bottom of tubular valve member 26.

To complete the installation the retainer ring 28 is fitted within the recess in the outer valve housing body part 21A and that body part is then moved downwardly as indicated by arrow 57 and the external screw thread 61 on its lower end is interfitted with the internal screw thread 60 in the inner annular part of valve housing body part 21B to complete the valve housing 21. Screw fitting the housing body part 21A down onto the housing body part 21B compresses the outer valve spring 25 and the outer annular valve member 27 is biased by the spring against the retainer ring 28 in the body part 21A to complete the valve assembly. The screw threads 60,61 are formed so that at the end of the screw fitting travel end threads jump over one another or interfere by way of retaining lugs to prevent unscrewing of housing body part 21A and to permanently mechanically couple the two body parts together. Alternatively, one of the body parts 21A, 21B may carry retaining lugs that interfit with recesses on the other of the body parts.

The illustrated valve assembly is easier to assemble than the assembly previously disclosed in International Patent Publication W02004/063087 since most of the valve components can be preassembled away from the container and simply inserted into position before the assembly is completed by a simple screw fitting of the valve housing body part 21B. Although the valve components are retained by a separate resilient retainer ring in the illustrated construction the valve housing body part 21A could be alternatively provided with a permanent valve seat and a retainer flange which could be of reduced diameter because the internal valve components do not need to be passed downwardly through it.

The double annular construction of the valve body part 21B also enables the valve to be fitted to a larger diameter container neck. It has been found that this enables containers to be blow moulded from larger diameter formers to produce containers capable of withstanding greater internal pressures than containers formed from smaller diameter formers. Specifically it has been found that with larger diameter formers producing a container neck of diameter in the range 50mm to 75mm, and preferably around 60mm, it is possible to produce containers capable of withstanding internal pressures of 150 psi or more.

The increased diameter of the housing body part 21B also enables incorporation of a container over-pressure release valve to vent excess pressure from the interior of the container. The drawings show an over-pressure release valve comprising a tubular release valve housing 62 formed integrally with the radial flange 54 interconnecting the inner and outer annular structures 52, 53 of the valve housing body part 21B so as to extend inwardly into the container and to form a vent opening extending through the flange 54 so as to vent directly to the atmosphere outside the container. The venting valve head and biasing spring are dropped into the vent housing during the final assembly, the valve spring being compressed and the valve components being held in place through engagement by an outwardly extending radial flange 64 formed on valve housing body part 21A to fit within the outer annular structure 53 of valve housing body part 21B.

The illustrated beer keg construction has been advanced by way of example only and the invention is not limited in application to the details of this construction or to the storage and dispensing of beer. The neck of the container may be connected to the valve body by compression of a metal clinching ring instead of by welding or by means of screw threaded retaining ring. Containers fitted with valve structures in accordance with the invention may be used for storing, filling and dispensing other beverages such as cider and carbonated beverages or indeed any liquid to be dispensed under gas pressure. The pressurising gas may be carbon dioxide, nitrogen or any other suitable gas according to the nature of the liquid to be stored and dispensed.

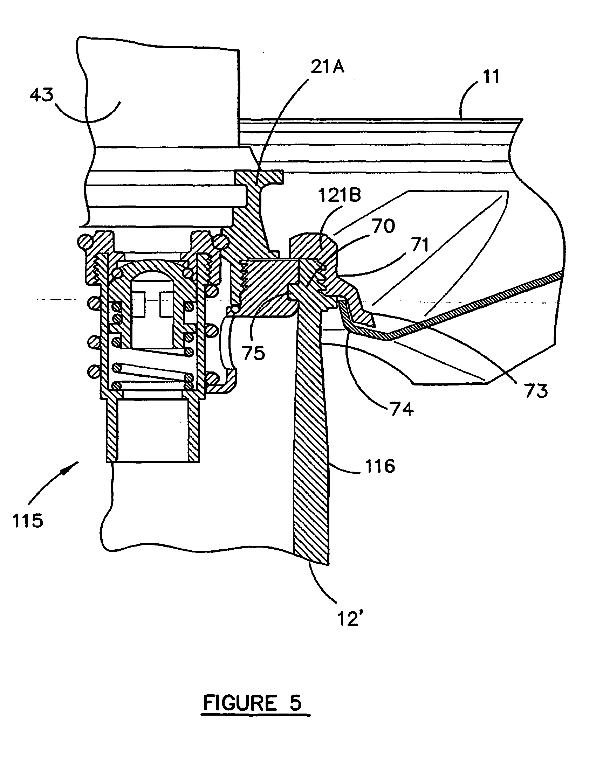

Figure 5 illustrates a valve structure 115 of an embodiment. Where elements are the same as in previous arrangementsor embodiments, the same numbering is used. Referring to Figure 5, persons skilled in the art will appreciate that the liquid container 12' is in a pre-blow moulding configuration. The valve structure 115 allows screw-threaded attachment of the valve structure to the container 12'. In this embodiment, the neck 70 has a threaded portion provided with a buttress thread. The first valve housing body part 121B has a securing ring 71 having a complementary buttress thread on an inner wall thereof such that the first valve housing body part 121B fits over the lip of the neck 70 of the container 12' and can be screw-threadably attached to the container. The securing ring 71 has a lower retaining lip 73 that retains a neck portion 74 of the outer container 11 against the neck 70 of the inner container 12'. The securing ring provides part of a retaining mechanism for preventing the securing from being removed once it has been deployed without damaging the container in the form of retaining lugs (not shown) that interfit with recesses (not shown) provided in the neck portion of the outer container.

The construction illustrated in Figure 5 relies on the valve structure 115 plugging the neck 70 of the inner container 12' thus allowing the screw thread to resist the pressurised contents of container 12'. The use of a buttress thread on the neck 70 and securing ring 71 also assists in retaining the valve structure 115 against the pressurised contents. The plugging of the neck allows a threaded construction to be used on much wider necks then was previously thought possible. That is, as the valve structure 115 plugs the neck 70 it prevents the neck 70 from deforming by going out of round - i.e. from a circular shaped opening to an oval shaped opening or from collapsing. It also avoids the need for the second valve housing the body part to be heat fused or crimped onto the neck 70 as in the previous embodiment. As a result, the valve structure 115 can be completely assembled prior to attachment to the container 12'. This provides for greater alternatives as to the order of assembly and can accommodate neck sizes of 25-200 mm. Persons skilled in the art will appreciate that this design allows a one-part valve housing to be employed.

However, a two-part housing allows valve structures of different diameters to be constructed which employs the same inner valve housing body part 21A while varying the size of the outer annular valve housing body part 121B.

Other variations will be apparent to persons skilled in the art and fall within the scope of the invention described herein.

## Claims

1. Apparatus for storing and dispensing a liquid comprising:
a liquid container (12') having a neck (70) through which to fill the container (12') with a liquid and to dispense the liquid therefrom, the neck (70) having an external screw thread;
a valve structure (115) disposed within the container neck (70); and
a dispenser tube (14) extending from the valve structure (115) to an interior region of the container (12'):
wherein the valve structure (115) defines valves for supply of pressurising fluid into the interior of the container (12') and for dispensing liquid outwardly through the dispenser tube (14) and valve structure (115) and wherein the valve structure comprises a securing ring (71) that has an internal screw-thread by which the valve structure is secured to the neck (70) of the container (12') and a valve housing (21) that plugs the container neck (70) and extends from an inner end (23) disposed anteriorly of the container (12') to an outer end (22) disposed exteriorly of the container (12') and valve components defining within the housing (21) a pair of valves for the supply of pressurising fluid into the interior of the container (12') and for dispensing liquid outwardly from the container (12').

2. Apparatus as claimed in claim 1, wherein the valve housing (21) comprises separately formed first and second formed valve housing body parts (12B, 21A), the first valve housing body part (121B) being attached into the neck (70) of the container (12') and the second valve housing body part (21A) being mechanically coupled to the first body part (121B) to form the valve housing (21).

3. Apparatus as claimed in claim 1, wherein the valve housing (21) is a one-part valve housing.

4. Apparatus as claimed in any one of claims 1 to 3, wherein the screw threads of the neck (70) and the securing ring (71) are buttress threads.

5. Apparatus as claimed in any one of claims 1 to 3, wherein the liquid container (12') is of two-part construction and the neck (70) is formed on an inner container; and wherein the securing ring (71) has a retaining lip (73) that retains a neck portion (74) of an outer container (11) put against said neck (70).

6. Apparatus as claimed in claim 1 comprising a retaining mechanism that acts against removal of the securing ring (71) once it has been screwed to the container neck (70).

7. Apparatus as claimed in claim 6 wherein the retaining mechanism comprises a plurality of lugs carried by one of the securing ring (71) and the container (12') and a plurality of corresponding recesses in the other of the securing ring (71) and the container (12') such that when the lugs are located within the recesses they act against unscrewing of the securing ring (71).

8. Apparatus as claimed in claim 2, wherein the first valve housing body part (121B) comprises the securing ring (71).

9. A valve structure (115) for a liquid storage and dispensing container (12') comprising:
a valve housing (21) for plugging the neck (70) of a liquid container (12') having an external screw-thread and through which to fill and discharge liquid into and from the container (12') and extending from a first end (23) to be located interiorly of the container (12') when so attached to an end (22) to be located exteriorly of the container (12');
a securing ring (71) having an internal screw-thread by which the valve housing (21) is secured to the liquid container (12'); and
valve components defining within the valve housing (21) a pair of valves for supply of pressurising gas into the interior of the container (12') and for dispensing liquid outwardly from the container (12').

10. A valve structure (115) as claimed in claim 9, wherein the valve housing (21) comprises separately formed first and second formed valve housing body parts (121 B, 21A), the first valve housing body part (121B) being attached into the neck (70) of the container (12') and the second valve housing body part (21A) being mechanically coupled to the first body part (121B) to form the valve housing (21).

11. A valve structure (115) as claimed in claim 9, wherein the valve housing (21) is a one-part valve housing.

12. A valve structure (115) as claimed in any one of claims 8 to 10, wherein the screw threads of the neck (70) and the securing ring (71) are buttress threads.

13. A valve structure (115) as claimed in any one of claims 8 to 10, wherein the liquid container (12') is of two-part construction and the neck (70) is formed on an inner container; and wherein the securing ring (71) has a retaining lip (73) that retains a neck portion (74) of an outer container (11) put against said neck (70).

14. A valve structure (115) as claimed in claim 10, wherein the first valve housing body part (121B) comprises the securing ring (71).

## Patentansprüche

1. Vorrichtung zum Lagern und Ausgeben von Flüssigkeiten, umfassend:
einen Flüssigkeitsbehälter (12') mit einem Hals (70), durch den der Behälter (12') mit einer Flüssigkeit gefüllt und durch den die Flüssigkeit ausgegeben werden kann, wobei der Hals (70) ein Außengewinde aufweist;
eine Ventilanordnung (115), die im Hals (70) des Behälters angeordnet ist; und
ein Ausgaberohr (14), welches sich von der Ventilanordnung (115) in einen inneren Bereich des Behälters (12') erstreckt;
wobei die Ventilanordnung (115) ein Ventil zur Einbringung von Druckfluid in das Innere des Behälters (12') und zur Ausgabe von Flüssigkeit durch das Ausgaberohr (14) und die Ventilanordnung (115) nach außen bildet, und wobei die Ventilanordnung (115) einen Sicherungsring (71), der ein Innengewinde aufweist, mit dem die Ventilanordnung (115) am Hals (70) des Behälters (12') befestigt ist, und ein Ventilgehäuse (21) umfasst, welches den Hals (70) des Behälters (12') verschließt, sich von einem inneren, im Innern des Behälters (12') angeordneten Ende (23) zu einem äußeren, außerhalb des Behälters (12') angeordneten Ende (22) erstreckt, und wobei Ventilkomponenten innerhalb des Gehäuses (21) ein Paar von Ventilen zur Einbringung von Druckfluid in das Innere des Behälters (12') und zur Ausgabe von Flüssigkeit nach außen bilden.

2. Vorrichtung nach Anspruch 1,
wobei das Ventilgehäuse (21) zwei getrennt voneinander ausgeformte erste und zweite Ventilgehäuseteile (121B, 21A) umfasst, wobei das erste Ventilgehäuseteil (121B) an dem Hals (70) des Behälters (12') und das zweite Ventilgehäuseteil (21A) mechanisch mit dem ersten Ventilgehäuseteil (121B) verbunden ist, um das Ventilgehäuse (21) zu bilden.

3. Vorrichtung nach Anspruch 1,
wobei das Ventilgehäuse (21) ein einstückiges Ventilgehäuse ist.

4. Vorrichtung nach einem der Ansprüche 1 bis 3,
wobei die Gewinde am Hals (70) und am Sicherungsring (71) Sägezahngewinde sind.

5. Vorrichtung nach einem der Ansprüche 1 bis 3,
wobei der Flüssigkeitsbehälter (12') eine zweiteilige Konstruktion ist und der Hals (70) an einem inneren Behälter ausgeformt ist, wobei der Sicherungsring (71) einen Führungsbund (73) aufweist, der einen Halsbereich (74) des äußeren Behälters (11) an den Hals (70) anliegend hält.

6. Vorrichtung nach Anspruch 1,
umfassend einen Rückhaltemechanismus der einem Entfernen des Sicherungsrings (71) entgegenwirkt sobald dieser auf den Hals (70) des Behälters (12') aufgeschraubt wurde.

7. Vorrichtung nach Anspruch 6,
wobei der Rückhaltemechanismus eine Vielzahl von Vorsprüngen an dem einen von Sicherungsring (71) oder Behälter (12') und eine Vielzahl von dazugehörigen Vertiefungen an dem anderen von Sicherungsring (71) oder Behälter (12') umfasst, sodass, sofern sich die Vorsprünge in den Vertiefungen befinden, diese einem Losschrauben des Sicherungsrings (71) entgegenwirken.

8. Vorrichtung nach Anspruch 2,
wobei das erste Ventilgehäuseteil (121B) den Sicherungsring (71) umfasst.

9. Ventilanordnung (115) für einen Flüssigkeitslager- und -ausgabebehälter (12'), umfassend
ein Ventilgehäuse (21) zum Verschließen des Halses (70) eines Flüssigkeitsbehälters (12') mit einem Außengewinde und durch welchen Flüssigkeit in den Behälter (12') eingefüllt und aus diesem ausgegeben werden kann, wobei sich das Ventilgehäuse (21) von einem inneren, im Innern eines Behälters (12'), an dem es angebracht ist, angeordneten Ende (23) zu einem äußeren, außerhalb des Behälters (12') angeordneten Ende (22) erstreckt;
ein Sicherungsring (71) mit einem Innengewinde zum Sichern des Ventilgehäuses (21) am Flüssigkeitsbehälter (12'); und
Ventilkomponenten, die innerhalb des Gehäuses (21) ein Paar von Ventilen zur Einbringung von Druckgas in das Innere des Behälters (12') und zur Ausgabe von Flüssigkeit nach außen bilden.

10. Ventilanordnung (115) nach Anspruch 9,
wobei das Ventilgehäuse (21) zwei getrennt voneinander ausgeformte erste und zweite Ventilgehäuseteile (121B, 21A) umfasst, wobei das erste Ventilgehäuseteil (121B) an dem Hals (70) des Behälters (12') und das zweite Ventilgehäuseteil (21A) mechanisch mit dem ersten Ventilgehäuseteil (121B) verbunden ist, um das Ventilgehäuse (21) zu bilden.

11. Ventilanordnung (115) nach Anspruch 9,
wobei das Ventilgehäuse (21) ein einstückiges Ventilgehäuse ist.

12. Ventilanordnung (115) nach einem der Ansprüche 8 bis 10,
wobei die Gewinde am Hals (70) und am Sicherungsring (71) Sägezahngewinde sind.

13. Ventilanordnung (115) nach einem der Ansprüche 8 bis 10,
wobei der Flüssigkeitsbehälter (12') eine zweiteilige Konstruktion ist und der Hals (70) an einem inneren Behälter ausgeformt ist, wobei der Sicherungsring (71) einen Führungsbund (73) aufweist, der einen Halsbereich (74) des äußeren Behälters (11) an den Hals (70) anliegend hält.

14. Ventilanordnung (115) nach Anspruch 10,
wobei das erste Ventilgehäuseteil (121B) den Sicherungsring (71) umfasst.

## Revendications

1. Appareil destiné à stocker et distribuer un liquide comprenant :
un récipient de liquide (12') muni d'un goulot (70) par lequel on remplit le récipient (12') avec un liquide et on distribue le liquide à partir de ce dernier, le goulot (70) présentant un filetage de vis externe ;
une structure de valve (115) disposée à l'intérieur du goulot (70) du récipient ; et
un tube de distribution (14) s'étendant à partir de la structure de valve (115) jusqu'à une région intérieure du récipient (12') ;
dans lequel la structure de valve (115) définit des valves pour amener le fluide sous pression à l'intérieur du récipient (12') et pour distribuer le liquide vers l'extérieur par le tube de distribution (14) et la structure de valve (115), laquelle structure de valve comprend un anneau de fixation (71) qui présente un filetage de vis interne grâce auquel la structure de valve est fixée sur le goulot (70) du récipient (12') et un boîtier de valve (21) qui bouche le goulot (70) du récipient et s'étend à partir d'une extrémité interne (23) disposée à l'intérieur du récipient (12') jusqu'à une extrémité externe (22) disposée à l'extérieur du récipient (12'), et des composants de valve définissant, à l'intérieur du boîtier (21), une paire de valves pour amener le fluide sous pression à l'intérieur du récipient (12') et pour distribuer le liquide à l'extérieur du récipient (12').

2. Appareil selon la revendication 1, dans lequel le boîtier de valve (21) comprend des première et seconde parties de corps de boîtier de valve (121B, 21A) formées séparément, la première partie de corps de boîtier de valve (121B) étant fixée dans le goulot (70) du récipient (12') et la seconde partie de corps de boîtier de valve (21A) étant mécaniquement couplée à la première partie de corps (121B) afin de former le boîtier de valve (21).

3. Appareil selon la revendication 1, dans lequel le boîtier de valve (21) est un boîtier de valve en une seule partie.

4. Appareil selon l'une quelconque des revendications 1 à 3, dans lequel les filetages de vis du goulot (70) et de la bague de fixation (71) sont des filetages trapézoïdaux.

5. Appareil selon l'une quelconque des revendications 1 à 3, dans lequel le récipient de liquide (12') est une construction en deux parties et le goulot (70) est formé sur un récipient interne ; et dans lequel la bague de fixation (71) a une lèvre de retenue (73) qui retient une partie du goulot (74) d'un récipient externe (11) placé contre ledit goulot (70).

6. Appareil selon la revendication 1, comprenant un mécanisme de retenue qui agit contre le retrait de la bague de fixation (71) une fois qu'elle a été vissée sur le goulot (70) du récipient.

7. Appareil selon la revendication 6, dans lequel le mécanisme de retenue comprend une pluralité de pattes supportées par l'un parmi la bague de fixation (71) et le récipient (12'), et une pluralité d'évidements correspondants de l'autre parmi la bague de fixation (71) et le récipient (12'), de sorte que lorsque les pattes sont positionnées à l'intérieur des évidements, elles agissent contre le dévissage de la bague de fixation (71).

8. Appareil selon la revendication 2, dans lequel la première partie de corps de boîtier de valve (121B) comprend la bague de fixation (71).

9. Structure de valve (115) pour un récipient de stockage et de distribution de liquide (12') comprenant :
un boîtier de valve (21) pour boucher le goulot (70) d'un récipient de liquide (12') présentant un filetage de vis externe par lequel on remplit et on décharge le liquide dans et du récipient (12') et s'étendant à partir d'une première extrémité (23), pour être positionné à l'intérieur du récipient (12') lorsqu'il est ainsi fixé à une extrémité (22), pour être positionné à l'extérieur du récipient (12') ;
une bague de fixation (71) présentant un filetage de vis interne grâce auquel le boîtier de valve (21) est fixé au récipient de liquide (12') ; et
des composants de valve définissant à l'intérieur du boîtier de valve (21), une paire de valves pour amener du gaz de pression à l'intérieur du récipient (12') et pour distribuer le liquide à l'extérieur du récipient (12').

10. Structure de valve (115) selon la revendication 9, dans laquelle le boîtier de valve (21) comprend des première et seconde parties de corps de boîtier de valve (121B, 21A) formées séparément, la première partie de corps de boîtier de valve (121B) étant fixée dans le goulot (70) du récipient (12') et la seconde partie de corps de boîtier de valve (21A) étant mécaniquement couplée à la première partie de corps (121B) afin de former le boîtier de valve (21).

11. Structure de valve (115) selon la revendication 9, dans laquelle le boîtier de valve (21) est un boîtier de valve en une seule partie.

12. Structure de valve (115) selon l'une quelconque des revendications 8 à 10, dans laquelle les filetages de vis du goulot (70) et de la bague de fixation (71) sont des filetages trapézoïdaux.

13. Structure de valve (115) selon l'une quelconque des revendications 8 à 10, dans laquelle le récipient de liquide (12') est une construction en deux parties et le goulot (70) est formé sur un récipient interne ; et dans laquelle la bague de fixation (71) a une lèvre de retenue (73) qui retient une partie du goulot (74) d'un récipient externe (11) placé contre ledit goulot (70).

14. Structure de valve (115) selon la revendication 10, dans laquelle la première partie de corps de boîtier de valve (121B) comprend la bague de fixation (71).
